Europäisches Patentamt

European Patent Office

Office européen des brevets

(19)

(11) **EP 1 135 209 B1**

(12) **FASCICULE DE BREVET EUROPEEN**

(45) Date de publication et mention
de la délivrance du brevet:
**08.01.2003 Bulletin 2003/02**

(21) Numéro de dépôt: **99949051.9**

(22) Date de dépôt: **18.10.1999**

(51) Int Cl.[7]: **B01J 35/00**, B01J 37/03

(86) Numéro de dépôt international:
**PCT/FR99/02492**

(87) Numéro de publication internationale:
**WO 00/023188 (27.04.2000 Gazette 2000/17)**

(54) **MATERIAU CONSTITUE PAR DES PARTICULES METALLIQUES ET PAR DES PARTICULES D'OXYDE ULTRAFINES**

MATERIAL AUS METALLISCHEN PARTIKELN UND ULTRAFEINEN OXIDPARTIKELN

MATERIAL CONSTITUTED BY METAL PARTICLES AND ULTRAFINE OXIDE PARTICLES

(84) Etats contractants désignés:
**AT BE CH CY DE DK ES FI FR GB GR IE IT LI LU
MC NL PT SE**

(30) Priorité: **20.10.1998 FR 9813113**

(43) Date de publication de la demande:
**26.09.2001 Bulletin 2001/39**

(73) Titulaire: **CENTRE NATIONAL DE
LA RECHERCHE SCIENTIFIQUE (CNRS)
75016 Paris (FR)**

(72) Inventeurs:
• **DUBOIS, Jean-Marie
F-54340 Pompey (FR)**
• **FORT, Yves
F-54500 Vandoeuvre les Nancy (FR)**
• **TILLEMENT, Olivier
F-54160 Frolois (FR)**

(74) Mandataire: **Sueur, Yvette et al
Cabinet SUEUR & L'HELGOUALCH,
109, boulevard Haussmann
75008 Paris (FR)**

(56) Documents cités:
**EP-A- 0 165 177        WO-A-97/33690
DE-A- 4 443 705        US-A- 5 147 841**

• **WEI-YONG YU ET AL: "PREPARATION OF
POLYMER-PROTECTED PT/CO BIMETALLIC
COLLOID AND ITS CATALYTIC PROPERTIES IN
SELECTIVE HYDROGENATION OF
CINNAMALDEHYDE TO CINNAMYL ALCOHOL"
POLYMERS FOR ADVANCED TECHNOLOGIES,
vol. 7, no. 8, 1 août 1996 (1996-08-01), pages
719-722, XP000623432 ISSN: 1042-7147**

## Description

La présente invention a pour objet un matériau constitué par des particules métalliques ultrafines et des particules d'oxyde ultrafines, un procédé pour sa préparation, et son utilisation, notamment pour la catalyse.

Les matériaux constitués par des particules métalliques fines sont connus pour diverses applications, notamment en catalyse. Différents procédés pour les préparer ont été décrits.

L. K. Kurihara, et al, (Nanostructured Materials, vol. 5, n° 6, 607-613, 1995) décrit la préparation de particules nanométriques d'un métal par un procédé dit "polyol", mis en oeuvre pour divers métaux faciles à réduire tels que par exemple Fe, Co, Ni, Cu, Ru, Rh, Pd, Ag, Sn, Re, W, Pt, seuls ou en mélange. Un tel procédé consiste à dissoudre ou à mettre en suspension un précurseur du dit métal dans un polyol, puis à chauffer au reflux pour obtenir un précipité de particules métalliques. Les particules obtenues peuvent être nanométriques. Elles sont polymétalliques lorsque le milieu réactionnel contient des sels de métaux différents. L'obtention de particules nanométriques de Cu-Co par le procédé polyol est décrite dans L. K. Kurihara, et al, J. Mat. Res. Vol. 10, n° 6, juin 1995.

Des particules nanométriques contenant de l'aluminium peuvent être préparées en réduisant un sel par LiAlH$_4$. Ainsi la préparation de particules nanocristallines Ti/Al et Ni/Al à partir d'un chlorure du métal correspondant en présence de LiAlH$_4$ est décrite par J.A. Haber, et al, (Advanced Materials, 1996, 8 n° 2). Le mécanisme réactionnel de ce procédé étant le suivant :

$$M^{n+} + nLiAlH_4 \rightarrow nLi_+ + M + nAlH_3 + n/2\ H_2\nearrow$$

$$nAlH_3 \rightarrow 3n/2\ H_2\nearrow$$

la teneur en Al présente une limite supérieure correspondant à la valence du métal associé.

On connaît en outre la préparation de particules intermétalliques nanométriques à l'aide de borohydrures. S.T. Schwab, et al, (Materials Science and Engineering A204 (1995) 197-200), décrivent la préparation de particules intermétalliques par réduction d'un mélange de sels de différents métaux par un borohydrure. (par exemple TiCl$_4$ + AlCl$_3$ + triéthylborohydrure de lithium). Ce procédé permet d'obtenir des particules intermétalliques sans limitation sur les teneurs en métaux respectifs. Il requiert un traitement thermique à 1000°C pour décomposer les produits obtenus par réaction des sels avec le borohydrure et obtenir les formes métalliques.

On connaît également la préparation de particules fines monométalliques par réaction d'un sel de métal avec l'hydrure de sodium en solution dans un solvant organique et en présence d'un alcoolate. Un tel procédé a été décrit pour des particules de nickel et pour des particules de zinc (Paul Caubère, et al, J. Am. Chem. Soc., 1982, 104, 7130 ; P. Gallezot, C. Leclercq, Y. Fort, P. Caubère, Journal of Molecular Catalysis, 93 (1994) 79 83, pp. 80-83 ; Brunet, et al, Journal of Organic Chemistry 1980, vol. 45, pp. 1937-1945). Les particules obtenues ont une dimension de cristallites de l'ordre du nm et sont utiles notamment comme catalyseur pour des catalyses hétérogènes. Lorsqu'elles sont préparées en présence d'un ligand phosphine ou 2/2'-bipyridine, elles perdent leurs propriétés réductrices et se comportent comme un agent de couplage (Lourak, et al, Journal of Organic Chemistry 1989, vol. 54, pp. 4840-4844).

Un procédé analogue a également été décrit pour la préparation de particules monométalliques de Pd, qui peuvent être utilisées comme catalyseur d'hydrogénation d'acétylène. (J.J. Brunet et P. Caubère, J. Org. Chem. 1984, 49, 4058-4060).

On connaît l'utilité des particules ultrafines polymétalliques comme catalyseur dans différentes réactions. La demande de brevet français n° 97.11814 décrit un procédé qui permet d'obtenir de particules polymétalliques ultrafines contenant de l'aluminium ayant une bonne pureté, avec une teneur en aluminium quelconque. Le procédé consiste à réduire un mélange de sels en solution dans un solvant organique à l'aide d'un hydrure de métal alcalin ou alcalino-terreux, à une température inférieure ou égale à la température de reflux du solvant, le mélange de sels en solution comprenant au moins un sel d'un métal ayant un potentiel d'oxydation standard E°$_{Mn+/M}$ à 25°C supérieur à -1,18 V. Le matériau obtenu par ce procédé est constitué par des particules manométriques polymétalliques qui ont une dimension moyenne de cristallites inférieure à 4 nm dans lesquelles les divers métaux présents sont intimement associés, et qui sont constituées par au moins un métal choisi dans le groupe constitué par Ni, Co, Fe, Cu, Zn, Cd, Cr Mn, Pd, Ag, Pt, Au, Bi et Sb, et au moins un métal choisi dans le groupe constitué par V, Zr, Ce, Ti, Hf et Al. Un tel matériau peut être utilisé comme catalyseur pour diverses réactions, notamment pour l'hydrogénation d'oléfines et pour le couplage direct de dérivés halogénés aromatiques.

Les présents inventeurs ont maintenant trouvé un procédé permettant la préparation de particules métalliques qui présentent des performances catalytiques améliorées.

La présente invention a ainsi pour objet un matériau constitué par des particules métalliques ultrafines et par des particules d'oxyde ultrafines, un procédé pour sa préparation, ainsi que son utilisation comme catalyseur.

Le matériau objet de la présente invention comprend au moins un élément métallique M au degré d'oxydation 0 ayant des propriétés catalytiques et au moins un élément métallique M' ayant un potentiel standard d'oxydation inférieur à celui de l'élément M, une partie au moins des atomes M' étant sous forme oxydée, et il est caractérisé en ce que :

- il est sous forme de particules ayant une dimension moyenne inférieure à 50 nm, au moins 80 % en nombre des particules ayant une dimension moyenne inférieure à 10 nm ;
- une particule du matériau est constituée par

  • au moins un élément métallique M au degré d'oxydation 0, ou par
  • au moins un élément métallique M' sous forme oxydée, ou par
  • au moins un élément métallique M' au degré d'oxydation 0, ou par
  • la combinaison d'au moins deux espèces choisies parmi les trois espèces précédentes,

étant entendu que la teneur moyenne du matériau en élément M au degré d'oxydation 0 est supérieure à 25% en nombre d'atomes par rapport à l'ensemble du matériau, la teneur moyenne totale en élément M' est au plus égale à 75% en nombre d'atomes par rapport à l'ensemble du matériau, la teneur moyenne en élément M' sous forme oxydée est supérieure à 10 % en nombre d'atomes par rapport à la teneur totale en élément M'.

Un métal M' qui a un potentiel standard d'oxydation inférieur à celui d'un métal M est un métal plus facile à oxyder que le métal M.

Dans la suite du texte, un élément M ou M' au degré d'oxydation 0 seront désignés respectivement par M(0) et M'(0).

Un matériau selon l'invention peut contenir en outre l'élément M sous forme oxydée, à condition que la proportion d'élément M oxydé ne représente pas plus de 10% en nombre d'atomes par rapport à la quantité totale d'élément M.

L'élément M est un métal présentant des propriétés catalytiques. Il est choisi avantageusement parmi Pd, Pt, Rh, Ir, Ni, Co, V, Mo, Zn, Cd, Cu, Ag, Au et Fe.

L'élément M' est choisi parmi V, Zr, Ce, Ti, Hf, Al, Ni, Co, Fe, Ru, Cu, Zn, Cd, Cr, Mn, Bi, Sb et Si. Le choix de l'élément M' est effectué de telle sorte que le potentiel standard d'oxydation de l'élément M' choisi est inférieur à celui de l'élément M auquel il est associé. On préfère tout particulièrement les couples (M, M') tels que (Ni, Fe), (Ni, Al), (Pd, Cu), (Pd, Ni) ou (Pd, Al).

Lorsque M est Ni, Co ou Fe, la dimension moyenne des particules constituant le matériau de l'invention est $\leq$ 10 nm, 80 % en nombre des particules ayant une dimension moyenne inférieure à 5 nm.

Le matériau de la présente invention peut être obtenu en soumettant à une oxydation des particules polymétalliques contenant au moins un élément M(0) ayant des propriétés catalytiques et au moins un élément M'(0) ayant un potentiel standard d'oxydation inférieur à celui du métal M, lesdites particules ayant une dimension moyenne inférieure à 50 nm, de préférence inférieure à 10 nm. Ces particules sont désignées ciaprès par "particules polymétalliques [M(0), M'(0)]". L'oxydation est effectuée à l'aide d'oxygène ou d'eau. Il est particulièrement avantageux d'utiliser l'oxygène contenu dans l'air.

L'oxydation totale ou partielle de l'élément M' contenu dans les particules polymétalliques [M(0), M'(0)] provoque l'enrichissement des particules en élément M(0) (notamment à la surface des particules) et la diminution de la dimension moyenne des particules. Dans les particules obtenues, l'élément M(0) et éventuellement l'élément M'(0) sont intimement associés à une forme oxydée de l'élément M'. Suivant l'agent oxydant utilisé, la forme oxydée de l'élément M' est un oxyde ou un hydroxyde.

Le matériau de l'invention ne doit pas contenir plus de 10% en nombre d'atomes de l'élément M sous forme oxydée, par rapport à la teneur totale en élément M. Pour obtenir ce résultat, il est recommandé d'utiliser l'agent oxydant en quantité stoechiométrique par rapport à l'élément M' à oxyder, si l'oxydation totale de M' est souhaitée, ou en sous-stoechiométrie si une oxydation partielle de M' est souhaitée. Toutefois, lorsque l'élément M est un métal noble choisi parmi Au, Pd, Pt, il est conseillé d'utiliser un excès d'agent oxydant.

Les particules polymétalliques [M(0), M'(0)] soumises à l'oxydation peuvent être obtenues par divers procédés.

Dans un mode de réalisation préféré de l'invention, les particules polymétalliques [M(0), M'(0)] sont obtenues par réduction d'un mélange de sels des métaux M et M' en solution dans un solvant organique à l'aide d'un hydrure de métal alcalin ou d'un hydrure alcalino-terreux. Le métal M présentant une activité catalytique peut être choisi parmi Pd, Pt, Rh, Ir, Ni, Co, V, Mo, Zn, Cd, Cu, Ag, Au et Fe. Le métal M' peut être choisi parmi V, Zr, Ce, Ti, Hf, Al, Ni, Co, Fe, Ru, Cu, Zn, Cd, Cr, Mn, Bi, Sb et Si, étant entendu que l'élément M' est choisi de telle sorte que son potentiel standard d'oxydation soit inférieur à celui de l'élément M avec lequel il est associé. Le sel du métal M et le sel du métal M' peuvent être choisis parmi les chlorures, les bromures, les iodures, les acétates, les acétylacétonates et les alcoolates. Les proportions des divers sels utilisés pour la réaction sont choisies en fonction de la composition souhaitée pour les particules polymétalliques, étant entendu que les proportions sont conservées après réduction par l'hydrure. Lorsque l'on utilise des sels hydratés du commerce, il est préférable de les broyer finement avant de les sécher sous vide, afin d'éviter toute décomposition. L'hydrure peut être choisi parmi LiH, NaH, KH, $CaH_2$ et $MgH_2$. NaH peut avantageusement être utilisé sous la forme d'une solution commerciale à 65% en masse dans l'huile minérale, éventuellement après lavage par un solvant organique aprotique. LiH peut être utilisé sous forme d'une poudre telle que disponible dans le commerce. Un tel procédé d'obtention de particules polymétalliques [M(0), M'(0)] est décrit de manière plus détaillée dans la demande de brevet français n°97.11814 précitée.

Dans un autre mode de réalisation, les particules polymétalliques [M(0), M'(0)] sont obtenues par un procédé dit "polyol", par dissolution ou par mise en suspension d'un précurseur de chacun des métaux M et M' dans un polyol, puis chauffage au reflux. Un tel procédé est décrit par exemple dans L. K. Kurihara, et al, (Nanostructured Materials, vol. 5, n° 6, 607-613, 1995) ou dans L. K. Kurihara, et al, (J. Mat. Res. Vol. 10, n° 6, juin 1995) précités.

Dans un autre mode de réalisation, les particules polymétalliques [M(0), M'(0)] sont obtenues par réduction d'un mélange de sels par LiAlH$_4$. Dans ce cas, l'hydrure peut être la source d'Al en tant qu'élément M'. Un tel procédé est décrit dans J.A. Haber, et al, (Advanced Materials, 1996, 8, n° 2) précité.

Dans un autre mode de réalisation, les particules polymétalliques [M(0), M'(0)] sont obtenues par réduction d'un mélange de sels des métaux M et M' par un borohydrure, suivie d'un traitement thermique éventuel, selon un procédé décrit par exemple dans S.T. Schwab, et al, (Materials Science and Engineering, A204 (1995) 197-200) précité. Le borohydrure est, de préférence, un trialkylborohydrure de lithium.

Les particules polymétalliques [M(0), M'(0)] peuvent également être obtenues sous forme de colloïdes polymétalliques par formation de micelles inverses, tel que décrit notamment dans le brevet US-A-5,147,841.

Les particules polymétalliques [M(0), M'(0)] peuvent également être obtenues par le procédé décrit dans le brevet DE-A-44 43 705. Ce procédé permet d'obtenir sous forme de colloïde, des particules associant un métal du groupe VIII et un métal du groupe Ib.

Lorsque les particules [M(0), M'(0)] sont obtenues sous forme d'une suspension dans un solvant, elles peuvent être soumises à l'oxydation directement dans ledit solvant. Elles peuvent aussi être extraites du solvant dans lequel elles sont obtenues, pour être utilisées sous forme d'une poudre.

Le procédé de l'invention permet d'obtenir un matériau sous forme de particules dans lequel au moins 80% des particules ont une dimension moyenne inférieure à 10 nm, lesdites particules ayant une concentration en M(0) plus élevée à la surface de la particule qu'au coeur de la particule.

Les particules de l'invention peuvent être utilisées avantageusement comme catalyseur, notamment pour -des réactions d'hydrogénation ou des réactions de couplage. Les particules polymétalliques [M(0), M'(0)] présentent en général elles-mêmes des propriétés catalytiques. Cependant, les inventeurs ont constaté qu'une oxydation contrôlée de ces particules, ayant pour résultat l'oxydation partielle ou totale de l'élément M' et une oxydation éventuelle de l'élément M limitée à 10% en nombre d'atomes de M au plus, permettait d'obtenir un matériau ayant des propriétés catalytiques nettement améliorées. En effet, la présence d'élément M' sous forme oxydée provoque une diminution de la taille des particules, ce qui augmente la surface spécifique en élément M(0) actif en catalyse. En outre, la présence de l'élément M' sous forme oxydée diminue la tendance à l'agglomération des particules M(0), ce qui augmente la longévité du catalyseur. Enfin, la présence de l'élément M' sous forme oxydée permet un meilleur accrochage du matériau selon l'invention sur un support, lorsque le matériau selon l'invention est utilisé comme catalyseur porté par un support solide tel que par exemple l'alumine, la silice, le rutile, la cordiérite ou le charbon.

La présente invention est décrite plus en détail à l'aide des exemples suivants qui sont donnés à titre d'illustration. L'invention n'est toutefois pas limitée à ces exemples particuliers mais englobe les matériaux équivalents.

Les exemples comparatifs A à G illustrent la préparation de matériaux monométalliques ou polymétalliques selon l'art antérieur.

Les exemples 1 à 8 illustrent la préparation de matériaux selon la présente invention.

Les exemples 9 à 14 illustrent l'utilisation de particules selon l'art antérieur et de particules selon l'invention comme catalyseur pour des réactions d'hydrogénation de styrène ou de cyclooctène.

Dans la description qui suit, "OAc" signifie "acétate", "Acac" signifie "acétylacétonate".

**Exemple A**

Préparation de particules bimétalliques Ni-Fe [3/1]

Dans un réacteur muni d'un réfrigérant et d'un septum, on a introduit 1,29 g (35 mmoles) de NaH, 0,89 g (5 mmoles) de Ni(OAc)$_2$ et 0,59 g (1,67 mmoles) de Fe(Acac)$_3$ en suspension dans 40 ml de THF (préalablement dégazé) à une température d'environ 20°C et sous atmosphère d'azote. La suspension obtenue a été chauffée à reflux (environ 63°C).

A l'aide d'une seringue, on a ensuite ajouté goutte à goutte, en 5 min environ, 0,74 g (10 mmoles) de t-BuOH en solution dans 10 ml de THF préalablement dégazé, et la suspension a été agitée durant 1 heure environ à 63°C.

La formation de particules ultrafines a été suivie par la mesure du dégagement d'hydrogène résultant des réactions de formation de t-BuONa et de réduction des sels métalliques. Après la période de chauffage, les particules étaient complètement formées et se présentaient sous la forme d'une suspension de couleur noire. Elles ont été maintenues sous l'atmosphère d'hydrogène issue de la préparation pour limiter les risques d'oxydation.

## Exemple B

Préparation de particules bimétalliques Ni-Fe [3/1]

On a préparé des particules bimétalliques Ni-Fe [3/1] en opérant de la même manière que dans l'exemple 1, mais en utilisant 0,27 g (1,67 mmoles) de FeCl$_3$ comme source de Fe, et en chauffant à 63°C pendant 6 heures.

## Exemple C

Préparation de particules monométalliques Pd

On a préparé des particules monométalliques Pd en opérant de la même manière que dans l'exemple A, mais en utilisant 1,1 g (30 mmoles) de NaH, 1,12 g (5 mmoles) de Pd(OAc)$_2$ et 0,74 g (10 mmoles) de t-BuOH, et en chauffant à 63°C pendant 0,5 heure.

## Exemple D

Préparation de particules monométalliques Al

On a préparé des particules monométalliques Al en opérant de la même manière que dans l'exemple A, mais en utilisant 1,48 g (40 mmoles) de NaH, 1,62 g (5 mmoles) de Al(Acac)$_3$ et 1,11 g de t-BuOH, et en chauffant à 63°C pendant 8 heures.

## Exemple E

Préparation de particules monométalliques Ni

On a préparé des particules monométalliques Ni en opérant de la même manière que dans l'exemple A, mais en utilisant 1,1 g (30 mmoles) de NaH, 0,89 g (5 mmoles) de Ni(OAc)$_2$ et 0,74 g (10 mmoles) de t-BuOH, et en chauffant à 63°C pendant 0,5 heure.

## Exemple F

Préparation de particules monométalliques Cu

On a préparé des particules monométalliques Cu en opérant de la même manière que dans l'exemple A, mais en utilisant 1,1 g (30 mmoles) de NaH, 0,91 g (5 mmoles) de Cu(OAc)$_2$ et 0,74 g de t-BuOH, et en chauffant à 63°C pendant 0,5 heure.

## Exemple G

Préparation de particules bimétalliques Pd-Cu [1/1]

On a préparé des particules bimétalliques Pd-Cu [1/1] en opérant de la même manière que dans l'exemple A, mais en utilisant 1,48 g (40 mmoles) de NaH, 1,12 g (5 mmoles) de Pd(OAc)$_2$, 0,91 g (5 mmoles) de Cu(OAc)$_2$ et 0,74 g de t-BuOH, et en chauffant à 63°C pendant 1,5 heure.

## Exemple 1

Préparation de particules bimétalliques Ni-Fe [3/1] contenant du fer oxydé.

A température ambiante, on a introduit dans un réacteur contenant la suspension de particules [Ni-Fe] obtenue à la fin de l'exemple A, 15 ml d'air à l'aide d'une seringue, et on a laissé réagir le milieu pendant 1,5 heures.
Le produit obtenu contient du fer oxydé, correspondant à 10 % en équivalent de Fe(III). L'analyse par microscopie électronique à transmission du produit obtenu montre la présence d'oxydes de fer essentiellement sous forme FeO avec une taille de cristallites inférieure à 5 nm.

## Exemple 2

Préparation de particules bimétalliques Ni-Fe [3/1] contenant du fer oxydé.

A température ambiante, on a introduit dans un réacteur contenant la suspension de particules [Ni-Fe] obtenue à la fin de l'exemple B, 15 ml d'air à l'aide d'une seringue, et on a laissé réagir le milieu pendant 2 heures. Le produit obtenu contient du fer oxydé, correspondant à 10 % en équivalent de Fe(III).

## Exemple 3

Préparation de particules bimétalliques Ni-Fe [3/1] contenant du fer oxydé.

A température ambiante, on a introduit dans un réacteur contenant la suspension de particules [Ni-Fe] obtenue à la fin de l'exemple A, 37,5 ml d'air à l'aide d'une seringue, et on a laissé réagir le milieu pendant 2 heures. Le produit obtenu contient du fer oxydé, correspondant à 25 % en équivalent de Fe(III).

## Exemple 4

Préparation de particules bimétalliques Ni-Fe [3/1] contenant du fer oxydé.

A température ambiante, on a introduit dans un réacteur contenant la suspension de particules [Ni-Fe] obtenue à la fin de l'exemple A, 75 ml d'air à l'aide d'une seringue, et on a laissé réagir le milieu pendant 2 heures. Le produit obtenu contient du fer oxydé, correspondant à 50 % en équivalent de Fe(III).

**Exemple 5**

Préparation de particules bimétalliques Pd-Al [1/1] contenant 100% d'aluminium oxydé.

On a préparé des particules bimétalliques en opérant de la même manière que dans l'exemple A, mais en utilisant 1,66 g (45 mmoles) de NaH, 1,12 g (5 mmoles) de Pd(OAc)$_2$, 1,62 g (5 mmoles) de Al(Acac)$_3$ et 0,74 g (10 mmoles) de t-BuOH. La réaction a été effectuée dans le THF anhydre dégazé et le milieu réactionnel a été chauffé à 63°C pendant 4,5 heure. Après retour de la suspension ainsi obtenue à la température ambiante, on a relié le réacteur à un réservoir d'air contenant environ 900 ml d'air et on a laissé réagir pendant 1 heure.

Une analyse au microscope électronique à transmission par perte d'énergie a permis de conclure que plus de 99% de l'aluminium est sous forme oxydée.

**Exemple 6**

Préparation de particules bimétalliques Ni-Al [3/1] contenant 100% d'aluminium oxydé.

On a préparé des particules bimétalliques en opérant de la même manière que dans l'exemple A, mais en utilisant 1,29 g (35 mmoles) de NaH, 0,89 g (5 mmoles) de Ni(OAc)$_2$, 0,54 g (1,67 mmoles) de Al (Acac)$_3$ et 0,74 g (10 mmoles) de t-BuOH. La réaction a été effectuée dans le THF anhydre dégazé et le milieu réactionnel a été chauffé à 63°C pendant 1,5 heure. Après retour de la suspension ainsi obtenue à la température ambiante, on a relié le réacteur à un réservoir d'air contenant environ 900 ml d'air et on a laissé réagir pendant **1 heure.**

**Exemple 7**

Préparation de particules bimétalliques Ni-Al [1/1] contenant 100% d'aluminium oxydé.

On a préparé des particules bimétalliques en opérant de la même manière que dans l'exemple D, mais en utilisant 1,66 g (45 mmoles) de NaH, 0,89 g (5 mmoles) de Ni(OAc)$_2$, 1,62 g (5 mmoles) de Al(Acac)$_3$ et 0,74 g (10 mmoles) de t-BuOH. La réaction a été effectuée dans le THF anhydre dégazé et le milieu réactionnel a été chauffé à 63°C pendant 4 heures. Après retour de la suspension ainsi obtenue à la température ambiante, on a relié le réacteur à un réservoir d'air contenant environ 900 ml d'air et on a laissé réagir pendant 1 heure.

**Exemple 8**

Préparation de particules bimétalliques Pd-Cu [1/1] contenant 100% de cuivre oxydé.

On a préparé des particules bimétalliques en opérant de la même manière que dans l'exemple A, mais en utilisant 1,48 g (40 mmoles) de NaH, 1,12 g (5 mmoles) de Pd(OAc)$_2$, 0,91 g (5 mmoles) de Cu(OAc)$_2$ et 0,74 g (10 mmoles) de t-BuOH. La réaction a été effectuée dans le THF anhydre dégazé et le milieu réactionnel a été chauffé à 63°C pendant 1,5 heure. Après retour de la suspension ainsi obtenue à la température ambiante, on a relié le réacteur à un réservoir d'air contenant environ 1 1 d'air et on a laissé réagir pendant 4 heures.

Les matériaux obtenus dans les exemples A à G selon l'art antérieur et les exemples 1 à 8 selon la présente invention ont été utilisés comme catalyseur pour des réactions d'hydrogénation du cyclooctène et du styrène. Le substrat à hydrogéner (10 mmoles pour le cyclooctène, 40 mmoles pour le styrène) a été mis en solution dans 15 ml d'éthanol, on a introduit le catalyseur dans la solution et a mis le milieu réactionnel sous une pression d'hydrogène de $10^5$ Pa. L'état d'avancement de la réaction a été déterminé par mesure de l'hydrogène absorbé et contrôlé par chromatographie en phase gazeuse. Les performances comparées de composés de l'art antérieur et de composés selon l'invention sont indiquées dans les tableaux 1 à 6. La réactivité du système catalytique N est indiquée par le nombre de cycles catalytiques exprimé en mn$^{-1}$ (turnover number), qui correspond, à un instant donné, à la quantité de substrat consommée par quantité de catalyseur et par unité de temps. Toutes choses étant égales par ailleurs, plus le nombre de cycles est élevé, plus la réactivité du système est importante.

**Exemple 9**

Les matériaux des exemples A, 1, 3 et 4 ont été utilisés comme catalyseur dans une réaction d'hydrogénation du styrène. Les résultats sont donnés dans le tableau 1 ci-dessous.

Tableau 1

| Matériau | Ex. | Fe oxydé | N (min$^{-1}$) |
|---|---|---|---|
| Ni-Fe (3-1) | A | 0 | 16,5 |
| Ni-Fe (3-1) | 1 | 10 | 29,5 |
| Ni-Fe (3-1) | 3 | 25 | 30,5 |
| Ni-Fe (3-1) | 4 | 50 | 19 |

Il apparaît que les meilleures performances catalytiques sont obtenues à l'aide de particules Ni-Fe (3-1) contenant du Fe à l'état oxydé qui représente de 10 à 25 % d'équivalent en Fe(III).

## Exemple 10

Les matériaux des exemples B et 2 ont été utilisés comme catalyseur dans une réaction d'hygrogénation du styrène. Les résultats sont donnés dans le tableau 2.

Tableau 2

| Matériau | Ex. | Fe oxydé | N (min$^{-1}$) |
|---|---|---|---|
| Ni-Fe (3-1) | B | 0 | 5,3 |
| Ni-Fe (3-1) | 2 | 10 | 9,3 |

Il apparaît que les meilleures performances catalytiques sont obtenues à l'aide de particules Ni-Fe (3-1) contenant du fer oxydé correspondant à 10% d'équivalent de Fe(III).

## Exemple 11

Les matériaux des exemples C, D et 5 ont été utilisés comme catalyseur dans une réaction d'hydrogénation du styrène. Les résultats sont donnés dans le tableau-3.

Tableau 3

| Matériau | Ex. | Al oxydé | N (min$^{-1}$) |
|---|---|---|---|
| Pd | A | 0 | 10,8 |
| Pd-Al (1-1) | 5 | 100 | 13,3 |
| Al | D | 0 | 0 |

## Exemple 12

Des matériaux obtenus selon les exemples E, D, 6 et 7 ont été utilisés comme catalyseur dans une réaction d'hydrogénation du styrène. Les résultats sont donnés dans le tableau 4.

Tableau 4

| Matériau | Ex. | Al oxydé | N (min$^{-1}$) |
|---|---|---|---|
| Ni | E | | 17,1 |
| Ni-Al (3-1) | 6 | 100 | 34,5 |
| Ni-Al (1-1) | 7 | 100 | 37,7 |
| Al | D | 0 | 0 |

Les propriétés catalytiques des particules de l'invention sont de 2 à 3 fois supérieures à celles des particules de Ni seul de l'art antérieur.

## Exemple 13

Des matériaux obtenus selon les exemples E, D, 6 et 7 ont été utilisés comme catalyseur dans une réaction d'hydrogénation du cyclooctène. Les résultats sont donnés dans le tableau 5.

Tableau 5

| Matériau | Ex. | Al oxydé | N (min$^{-1}$) |
|---|---|---|---|
| Ni | E | | 0,18 |
| Ni-Al (3-1) | 6 | 100 | 0,49 |
| Ni-Al (1-1) | 7 | 100 | 0,31 |
| Al | D | 0 | 0 |

Cet exemple confirme que les propriétés catalytiques des particules de l'invention sont nettement supérieures à celles des particules de Ni seul de l'art antérieur.

## Exemple 14

Des matériaux obtenus selon les exemples C, G, F et 8 ont été utilisés comme catalyseur dans une réaction d'hydrogénation du styrène. Les résultats sont donnés dans le tableau 6.

Tableau 6

| Matériau | Ex. | Cu oxydé | N (min$^{-1}$) |
|---|---|---|---|
| Pd | C | | 10,8 |
| Pd-Cu (1-1) | G | 0 | 11,7 |
| Pd-Cu (1-1) | 8 | 100 | 29,6 |
| Cu | F | 0 | 0 |

Il apparaît que les performances catalytiques sont considérablement améliorées par la présence du Cu oxydé.

## Revendications

**1.** Matériau comprenant au moins un élément métallique M au degré d'oxydation 0 ayant des propriétés catalytiques et au moins un élément métallique M' ayant un potentiel standard d'oxydation inférieur à celui de l'élément M, une partie au moins des atomes M' étant sous forme oxydée, **caractérisé en ce que** :

- le matériau est sous forme de particules ayant une dimension moyenne inférieure à 50 nm, au moins 80 % en nombre des particules ayant une dimension moyenne inférieure à 10 nmm ;
- une particule du matériau est constituée par

- au moins un élément métallique M au degré d'oxydation 0, ou par
- au moins un élément métallique M' sous forme oxydée, ou par
- au moins un élément métallique M' au degré d'oxydation 0, ou par
- la combinaison d'au moins deux espèces choisies parmi les trois espèces précédentes,

étant entendu que la teneur moyenne du matériau en élément M au degré d'oxydation 0 est supérieure à 25% en nombre d'atomes par rapport à l'ensemble du matériau, la teneur moyenne totale en élément M' est au plus égale à 75% en nombre d'atomes par rapport à l'ensemble du matériau, la teneur moyenne en élément M' sous forme oxydée est supérieure à 10 % en nombre d'atomes par rapport à la teneur totale en élément M'.

2. Matériau selon la revendication 1, **caractérisé en ce qu'**il contient une forme oxydée de l'élément M, à une teneur inférieure à 10% en nombre d'atomes.

3. Matériau selon la revendication 1, **caractérisé en ce que** la forme oxydée de l'élément M' est un oxyde ou un hydroxyde.

4. Matériau selon la revendication 1, **caractérisé en ce que** M représente au moins un élément choisi parmi Pd, Pt, Rh, Ir, Ni, Co, V, Mo, Zn, Cd, Cu, Ag, Au et Fe.

5. Matériau selon la revendication 4, **caractérisé en ce que** l'élément M' est choisi parmi V, Zr, Ce, Ti, Hf, Al, Ni, Co, Fe, Ru, Cu, Zn, Cd, Cr, Mn, Bi, Sb et Si et présente un potentiel standard d'oxydation inférieur à celui de l'élément M auquel il est associé.

6. Matériau selon la revendication 1, **caractérisé en ce que** les couples (M, M') sont choisis parmi les couples (Ni, Fe), (Ni, Al), (Pd, Cu), (Pd, Ni) et (Pd, Al).

7. Matériau selon la revendication 1, **caractérisé en ce que** le métal M est Ni, Co ou Fe, et la dimension moyenne des particules est inférieure à 10 nm, au moins 80 % en nombre des particules ayant une dimension moyenne inférieure à 5 nm.

8. Matériau selon la revendication 1, **caractérisé en ce que** dans les particules contenant le métal M au degré d'oxydation 0, la concentration en M(0) est plus élevée à la surface de la particule qu'au coeur de la particule.

9. Procédé de préparation d'un matériau selon la revendication 1, **caractérisé en ce qu'**il consiste à faire réagir avec un agent oxydant, des particules polymétalliques [M(0), M'(0)] contenant au moins un métal M au degré d'oxydation 0 ayant des propriétés catalytiques et au moins un métal M' au degré d'oxydation 0 ayant un potentiel standard d'oxydation inférieur à celui du métal M, lesdites particules ayant une dimension moyenne inférieure à 50 nm.

10. Procédé selon la revendication 9, **caractérisé en ce que** l'on utilise des particules ayant une dimension moyenne inférieure à 10 nm.

11. Procédé selon la revendication 9, **caractérisé en ce que** l'agent oxydant est l'oxygène ou l'eau.

12. Procédé selon la revendication 11, **caractérisé en ce que** l'agent oxydant est l'air.

13. Procédé selon la revendication 9, **caractérisé en ce que** l'on traite des particules polymétalliques dans lesquelles le métal M est un métal noble par un excès d'agent oxydant.

14. Procédé selon la revendication 9, **caractérisé en ce que** l'on utilise une quantité stoechiométrique d'agent oxydant par rapport à la quantité de métal M'(0) présent dans les particules à oxyder.

15. Procédé selon la revendication 9, **caractérisé en ce que** l'on utilise des particules [M(0), M'(0)] obtenues par réduction d'un mélange de sels des métaux M et M' en solution dans un solvant organique à l'aide d'un hydrure de métal alcalin ou d'un hydrure alcalino-terreux.

16. Procédé selon la revendication 15, **caractérisé en ce que** le sel du métal M et le sel du métal M' sont choisis parmi les chlorures, les bromures, les iodures, les acétates, les acétylacétonates et les alcoolates.

17. Procédé selon la revendication 15, **caractérisé en ce que** l'hydrure est choisi parmi LiH, NaH, KH, $CaH_2$ et $MgH_2$.

18. Procédé selon la revendication 9, **caractérisé en ce que** l'on utilise des particules [M(0), M'(0)] obtenues par dissolution ou par mise en suspension d'un précurseur de chacun des métaux M et M' dans un polyol, puis chauffage au reflux.

19. Procédé selon la revendication 9, **caractérisé en ce que** l'on utilise des particules [M(0), M'(0)] obtenues par réduction d'un mélange de sels par $LiAlH_4$.

20. Procédé selon la revendication 9, **caractérisé en ce que** l'on utilise des particules [M(0), M'(0)] obtenues par réduction d'un mélange de sels des métaux M et M' par un borohydrure, suivie d'un traitement thermique à une température d'environ 1000°C.

21. Procédé selon la revendication 20, **caractérisé en ce que** le borohydrure est un trialkylborohydrure de lithium.

22. Utilisation d'un matériau selon l'une des revendications 1 à 8 comme catalyseur de réactions d'hydrogénation d'oléfines ou de réactions de couplage.

**Patentansprüche**

1. Material, das zumindest ein Metallelement M der Oxidationsstufe 0, das katalytische Eigenschaften aufweist, und zumindest ein Metallelement M' mit einem Standard-Oxidationspotential unter jenem von Element M umfasst, wobei zumindest ein Teil der Atome M' in oxidierter Form vorliegen, **dadurch gekennzeichnet, dass**

   - das Material in Form von Teilchen mit einer mittleren Größe von unter 50 nm vorliegt, wobei zumindest 80 % der Teilchen eine mittlere Größe von unter 10 nm aufweisen;

   - ein Teilchen des Materials aus Folgendem besteht:

      • zumindest einem Metallelement M der Oxidationsstufe 0, oder aus
      • zumindest einem Metallelement M' in oxidierter Form, oder aus
      • zumindest einem Metallelement M' der Oxidationsstufe 0, oder aus
      • einer Kombination zumindest zweier Spezies, ausgewählt aus den drei obigen Spezies,

   mit der Maßgabe, dass der mittlere Gehalt des Materials an Element M der Oxidationsstufe 0 über 25 Atom-%, bezogen auf das gesamte Material, liegt, der mittlere Gesamtgehalt an Element M' höchstens 75 Atom-%, bezogen auf das gesamte Material, beträgt und der mittlere Gehalt an Element M' in oxidierter Form über 10 Atom-%, bezogen auf den Gesamtgehalt an Element M', liegt.

2. Material nach Anspruch 1, **dadurch gekennzeichnet, dass** es eine oxidierte Form von Element M in einem Gehalt von unter 10 Atom-% enthält.

3. Material nach Anspruch 1, **dadurch gekennzeichnet, dass** die oxidierte Form von Element M' ein Oxid oder ein Hydroxid ist.

4. Material nach Anspruch 1, **dadurch gekennzeichnet, dass** M zumindest ein Element, ausgewählt aus Pd, Pt, Rh, Ir, Ni, Co, V, Mo, Zn, Cd, Cu, Ag, Au und Fe, darstellt.

5. Material nach Anspruch 4, **dadurch gekennzeichnet, dass** das Element M' aus V, Zr, Ce, Ti, Hf, Al, Ni, Co, Fe, Ru, Cu, Zn, Cd, Cr, Mn, Bi, Sb und Si ausgewählt ist und ein Standard-Oxidationspotential unter jenem des Elements M aufweist, mit dem es assoziiert ist.

6. Material nach Anspruch 1, **dadurch gekennzeichnet, dass** die Paare (M, M') aus den Paaren (Ni, Fe), (Ni, Al), (Pd, Cu), (Pd, Ni) und (Pd, Al) ausgewählt sind.

7. Material nach Anspruch 1, **dadurch gekennzeichnet, dass** das Metall M Ni, Co oder Fe ist und die mittlere Teilchengröße unter 10 nm liegt, wobei zumindest 80 % der Teilchen eine mittlere Größe von unter 5 nm aufweisen.

8. Material nach Anspruch 1, **dadurch gekennzeichnet, dass** in den Teilchen, die das Metall M in der Oxidationsstufe 0 enthalten, die Konzentration von M(0) an der Oberfläche des Teilchens höher ist als im Kern des Teilchens.

9. Verfahren zur Herstellung eines Materials nach Anspruch 1, **dadurch gekennzeichnet, dass** es aus dem Umsetzen von Mehrfachmetallteilchen [M(0), M'(0)], die zumindest ein Metall M in der Oxidationsstufe 0 mit katalytischen Eigenschaften und zumindest ein Metall M' in der Oxidationsstufe 0 mit einem Standard-Oxidationspotential unter jenem von Metall M enthalten, wobei die Teilchen eine mittlere Größe von unter 50 nm aufweisen, mit einem Oxidationsmittel besteht.

10. Verfahren nach Anspruch 9, **dadurch gekennzeichnet, dass** Teilchen eingesetzt werden, die eine mittlere Größe von unter 10 nm aufweisen.

11. Verfahren nach Anspruch 9, **dadurch gekennzeichnet, dass** das Oxidationsmittel Sauerstoff oder Wasser ist.

12. Verfahren nach Anspruch 11, **dadurch gekennzeichnet, dass** das Oxidationsmittel Luft ist.

13. Verfahren nach Anspruch 9, **dadurch gekennzeichnet, dass** Mehrfachmetallteilchen, in denen das Metall M ein Edelmetall ist, mit einem Überschuss an Oxidationsmittel behandelt werden.

14. Verfahren nach Anspruch 9, **dadurch gekennzeichnet, dass** eine stöchiometrische Menge an Oxidationsmittel, bezogen auf die in den zu oxidierenden Teilchen vorhandene Menge an Metall M' (0), eingesetzt wird.

15. Verfahren nach Anspruch 9, **dadurch gekennzeichnet, dass** Teilchen [M(0), M'(0)] eingesetzt werden, die durch Reduktion eines Gemischs aus Salzen der Metalle M und M' in Lösung in einem organischen Lösungsmittel mittels Alkalimetallhydrid oder Erdalkalimetallhydrid erhalten werden.

16. Verfahren nach Anspruch 15, **dadurch gekennzeichnet, dass** das Salz von Metall M und das Salz von Metall M' aus Chloriden, Bromiden, Iodiden, Acetaten, Acetylacetonaten und Alkoholaten ausgewählt sind.

17. Verfahren nach Anspruch 15, **dadurch gekennzeichnet, dass** das Hydrid aus LiH, NaH, KH, CaH$_2$ und MgH$_2$ ausgewählt ist.

18. Verfahren nach Anspruch 9, **dadurch gekennzeichnet, dass** Teilchen [M(0), M'(0)] eingesetzt werden, die durch Lösen oder Suspendieren eines Vorläufers jedes der Metalle M und M' in einem Polyol, gefolgt von Rückflusserhitzen erhalten werden.

19. Verfahren nach Anspruch 9, **dadurch gekennzeichnet, dass** Teilchen [M(0), M'(0)] eingesetzt werden, die durch Reduktion eines Salzgemischs mittels LiAlH$_4$ erhalten werden.

20. Verfahren nach Anspruch 9, **dadurch gekennzeichnet, dass** Teilchen [M(0), M'(0)] eingesetzt werden, die durch Reduktion eines Gemischs aus Salzen der Metalle M und M' mit einem Borhydrid, gefolgt von einer Wärmebehandlung bei einer Temperatur von etwa 1.000 °C, erhalten werden.

21. Verfahren nach Anspruch 20, **dadurch gekennzeichnet, dass** das Borhydrid ein Lithiumtrialkylborhydrid ist.

22. Verwendung eines Materials nach einem der Ansprüche 1 bis 8 als Katalysator für Olefin-Hydrierungsreaktionen oder Kupplungsreaktionen.

**Claims**

1. A material comprising at least one metallic element M of degree of oxidation 0 having catalytic properties, and at least one metallic element M' having a standard oxidation potential less than that of the element M, at least a portion of the M' atoms being in an oxidized form ; **characterised in that** :

- the material is in the form of particles having a mean dimension less than 50 nm, at least 80% by number of the particles having a mean dimension less than 10 nm ;
- a particle of the material is constituted by

    • at least one metallic element M of degree of oxidation 0, or by
    • at least one metallic element M' in oxidized form, or by
    • at least one metallic element M' of degree of oxidation 0, or by
    • the combination of at least two species chosen from the three preceding species,

it being understood that the mean content of the element M of degree of oxidation 0 in the material is greater than 25% by number of atoms with respect to the whole of the material, the mean total content of the element M' is at most equal to 75% by number of atoms with respect to the whole of the material, and the mean content of the element M' in the oxidized form is greater than 10% by number of atoms with respect to the total content of the element M'.

2. Material according to claim 1, **characterised in that** it contains an oxidized form of the element M, in a content less than 10% by number of atoms.

3. Material according to claim 1, **characterised in that** the oxidized form of the element M' is an oxide or a hydroxide.

4. Material according to claim 1, **characterised in that** M represents at least one element chosen from among Pd, Pt, Rh, Ir, Ni, Co, V, Mo, Zn, Cd, Cu, Ag, Au and Fe.

5. Material according to claim 4, **characterised in that** the element M' is chosen from among V, Zr, Ce, Ti, Hf, Al, Ni, Co, Fe, Ru, Cu, Zn, Cd, Mn, Bi, Sb and Si, and has a standard oxidation potential less than that of the element M with which it is associated.

6. Material according to claim 1, **characterised in that** the pairs (M, M') are chosen from among the pairs (Ni, Fe), (Ni, Al), (Pd, Cu), (Pd, Ni) and (Pd, Al).

7. Material according to claim 1, **characterised in that** the metal M is Ni, Co, or Fe, and the mean dimension of the particles is less than 10 nm, at least 80% of the particles by number having a mean dimension less than 5 nm.

8. Material according to claim 1, **characterised in that** in the particles containing the metal M of degree of oxidation 0, the concentration of M(0) is greater at the surface of the particle than in the interior of the particle.

9. Process of preparation of a material according to claim 1, **characterised in that** it consists of causing to react with an oxidizing agent, [M(0), M'(0)] polymetallic particles containing at least one metal M of degree of oxidation 0 having catalytic properties and at least one metal M' of degree of oxidation 0 having a standard oxidation potential less than that of the metal M, the said particles having a mean dimension less than 50 nm.

10. Process according to claim 9, **characterised in that** particles are used having a mean dimension less than 10 nm.

11. Process according to claim 9, **characterised in that** the oxidizing agent is oxygen or water.

12. Process according to claim 11, **characterised in that** the oxidizing agent is air.

13. Process according to claim 9, **characterised in that** particles in which the metal M is a noble metal are treated with an excess of oxidizing agent.

14. Process according to claim 9, **characterised in that** a stoichiometric quantity of oxidizing agent is used with respect to the quantity of the metal M'(0) present in the particles to be oxidized.

15. Process according to claim 9, **characterised in that** [M(0), M'(0)] particles are used, obtained by reduction of a mixture of salts of the metals M and M' in solution in an organic solvent by means of a hydride of an alkali metal or an alkaline earth hydride.

16. Process according to claim 15, **characterised in that** the salt of the metal M and the salt of the metal M' are chosen from among chlorides, bromides, iodides, acetates, acetylacetonates, and alcoholates.

17. Process according to claim 15, **characterised in that** the hydride is chosen from among LiH, NaH, KH, $CaH_2$, and $MgH_2$.

18. Process according to claim 9, **characterised in that** [M(0), M'(0)] particles are used, obtained by dissolution or placing in suspension of a precursor of each of the metals M and M' in a polyol, then heating under reflux.

19. Process according to claim 9, **characterised in that** [M(0), M'(0)] particles are used, obtained by reduction of a mixture of salts by $LiAlH_4$.

20. Process according to claim 9, **characterised in that** [M(0), M'(0)] particles are used, obtained by reduction of a mixture of salts of the metals M and M' by a borohydride, followed by a heat treatment at a temperature of about 1,000°C.

21. Process according to claim 20, **characterised in that** the borohydride is a lithium trialkylborohydride.

22. Utilization of a material according to one of claims 1-8 as catalyst of olefin hydrogenation reactions or of coupling reactions.